# FASCICULE DE BREVET EUROPEEN

(11) **EP 0 435 744 B1**
(45) Date de publication et mention de la délivrance du brevet: **29.03.1995**
(21) Numéro de dépôt: 90403661.3
(22) Date de dépôt: 18.12.1990
(51) Int. Cl.: G21C 19/30, G21C 3/32

(54) **Embout inférieur d'un assemblage combustible d'un réacteur nucléaire refroidi par de l'eau légère**
Fussstück eines Leichtwasserkernreaktor-Brennstabbündels
Fuel assembly bottom nozzle for nuclear light water reactor

(30) Priorité: 21.12.1989 FR 8916996
(43) Date de publication de la demande: 03.07.1991
(73) Titulaire: FRAMATOME, 92400 Courbevoie (FR); COGEMA, F-78141 Velizy Villacoublay (FR)
(72) Inventeur: Leroux, Jean-Claude, F-69100 Villeurbanne (FR)
(74) Mandataire: Bouget, Lucien

(56) Documents cités:
- EP-A- 0 092 623
- EP-A- 0 288 245
- EP-A- 0 289 829
- EP-A- 0 311 037
- FR-A- 2 500 947
- US-A- 4 832 905

## Description

L'invention concerne un assemblage combustible d'un réacteur nucléaire refroidi par de l'eau légère et en particulier d'un réacteur nucléaire à eau sous pression.

Les réacteurs nucléaires à eau sous pression comportent un coeur constitué par des assemblages prismatiques disposés côte à côte en position verticale. Les assemblages comportent une ossature constituée par des tubes-guides longitudinaux et des grilles-entretoises et fermée par des embouts dans laquelle sont disposés les crayons combustibles.

L'un des embouts des assemblages, appelé embout inférieur, vient reposer sur la plaque inférieure de coeur qui est percée de trous au niveau de chacun des assemblages pour permettre le passage de l'eau de refroidissement du réacteur à travers le coeur dans la direction verticale et de bas en haut.

Cet embout comporte des pieds supports qui viennent reposer sur la plaque inférieure du coeur et un élément transversal par rapport à la direction des crayons combustibles du faisceau solidaire des pieds supports. Cet élément transversal est constitué par une plaque adaptatrice dans laquelle sont fixées les extrémités inférieures des tubes-guides de l'assemblage et qui est traversée par des ouvertures permettant le passage et assurant la répartition de l'eau de refroidissement du réacteur qui circule suivant la direction verticale et en contact avec la surface extérieure des crayons de l'assemblage, après traversée de l'embout inférieur.

La plaque adaptatrice de l'embout inférieur d'un assemblage combustible d'un réacteur refroidi à l'eau contribue ainsi à la rigidité de l'ossature de l'assemblage, assure la reprise des efforts exercés sur l'embout inférieur et en particulier la reprise du poids de l'ossature et du faisceau transmis par les tubes-guides et doit en plus permettre le passage et la répartition de l'eau de refroidissement de l'assemblage.

La plaque adaptatrice est principalement sollicitée en flexion et subit des contraintes importantes, en particulier au voisinage de sa face supérieure et de sa face inférieure. Cette plaque, réalisée sous forme monobloc, doit présenter une épaisseur importante assurant une grande rigidité à l'embout inférieur.

La plaque adaptatrice doit également assurer la retenue des crayons combustibles de l'assemblage, dans le cas où certains de ces crayons ne sont plus maintenus de façon suffisamment efficace par les éléments de maintien des grilles-entretoises et ont tendance à glisser dans la direction axiale du faisceau, sous l'effet de leur poids.

Dans la mesure où les trous de passage d'eau traversant la plaque adaptatrice sont généralement d'un diamètre supérieur au diamètre des crayons combustibles, il est nécessaire de prévoir un réseau de trous dans des positions décalées par rapport aux positions transversales des crayons combustibles, de manière que chacun des crayons combustibles se trouve à l'aplomb d'une partie pleine de la plaque adaptatrice.

Même dans le cas où tout ou partie des trous traversant la plaque adaptatrice présentent un diamètre inférieur et même nettement inférieur à celui des crayons combustibles, il est souhaitable d'éviter de placer ces trous de petit diamètre à l'aplomb des crayons combustibles qui risquent, en cas de chute accidentelle, de boucher un ou plusieurs passages d'eau et donc de diminuer ou de supprimer localement le refroidissement des crayons combustibles par circulation d'eau.

En outre, il est nécessaire de prévoir, compte tenu de l'épaisseur de la plaque adaptatrice, des trous de passage d'eau tels que la perte de charge de l'eau de refroidissement à travers l'embout inférieur soit la plus faible possible.

Il est extrêmement difficile de concevoir une plaque adaptatrice qui puisse répondre aux différents impératifs d'ordre mécanique et hydraulique évoqués ci-dessus.

L'usinage de cette plaque adaptatrice est une opération extrêmement délicate qui requiert une grande précision d'exécution.

En outre, des débris de matériaux peuvent être présents dans le circuit primaire du réacteur et sont susceptibles d'être entraînés par l'eau sous pression en circulation. Dans le cas où leur taille est faible (par exemple inférieure à 10 mm), ces débris peuvent passer au travers de la plaque adaptatrice de l'embout inférieur dont les trous de passage d'eau ont un diamètre généralement supérieur à 10 mm. Ces débris peuvent venir se coincer entre les crayons combustibles et les éléments de maintien des crayons au niveau de la première grille, c'est-à-dire de la grille-entretoise maintenant les crayons suivant un réseau régulier disposée le plus bas dans l'assemblage. Ces débris soumis aux sollicitations hydrauliques axiales et transversales qui sont importantes dans cette zone peuvent user le gainage du crayon combustible. Il risque d'en résulter une perte d'étanchéité de ce gainage ainsi qu'une augmentation du taux d'activité du circuit primaire du réacteur.

Pour éviter l'entraînement de ces débris à l'intérieur de l'assemblage, on a proposé dans le EP-A-0.289.829 de réaliser la filtration du fluide de refroidissement, au niveau de la plaque adaptatrice de l'embout inférieur, en prévoyant des trous traversant cette plaque adaptatrice dont le diamètre est suffisamment faible pour arrêter les débris susceptibles de se coincer dans la première grille de l'assemblage.

Cependant, pour assurer le passage du débit de fluide de refroidissement à travers la plaque adaptatrice, avec une perte de charge modérée, il est nécessaire de prévoir un réseau de trous de traversée très dense, ce qui complique encore l'usinage de la plaque adaptatrice.

Les embouts inférieurs des assemblages combustibles peuvent être réalisés sous forme monobloc, par usinage d'une pièce moulée ou, au contraire, à partir de plusieurs pièces moulées et usinées qui sont assemblées entre elles par soudage. Dans ce cas, il peut être particulièrement avantageux de réaliser le soudage par faisceau d'électrons.

Les embouts de l'assemblage peuvent être constitués comme décrit dans le FR-A-2.500947 par exemple par une structure réticulée limitée extérieurement par un cadre dont la section correspond sensiblement à la section transversale de l'assemblage et présentant des parois reliées entre elles et au cadre, délimitant des cellules de grande dimension n'introduisant qu'une perte de charge négligeable sur la circulation de l'eau de refroidissement du réacteur. Une plaque de faible épaisseur qui peut être découpée à la presse est rapportée et fixée sur l'une des faces de la structure réticulée de manière amovible. De manière à régler l'écoulement de l'eau de refroidissement à travers l'embout, la plaque est percée d'ouvertures dont la forme, les dimensions et la disposition permettent de fixer la perte de charge et la répartition de l'eau traversant l'embout.

De tels embouts sont principalement utilisés comme embouts supérieurs des assemblages et se prêtent peu à une utilisation comme embouts inférieurs dans laquelle ils doivent assurer à la fois le maintien des crayons et la répartition et le réglage du flux d'eau de refroidissement pénétrant dans l'assemblage. De plus, ces embouts n'assurent pas l'arrêt et la retenue des débris transportés par l'eau de refroidissement du réacteur.

Ces procédés de réalisation d'embouts inférieurs d'assemblages combustibles, à partir de pièces rapportées ne permettent donc pas de fournir une solution totalement satisfaisante aux problèmes relatifs à la tenue mécanique, au comportement hydraulique des plaques adaptatrices et à la possibilité d'arrêter et de retenir des débris transportés par l'eau de refroidissement.

Le but de l'invention est donc de proposer un assemblage combustible selon la revendication 1. L'embout inférieur présente en outre des propriétés de résistance mécanique et un comportement hydraulique optimisés et peut être réalisé de manière simple, par des opérations d'usinage classiques tout en permettant l'arrêt de débris en circulation dans l'eau de refroidissement du réacteur.

Afin de bien faire comprendre l'invention, on va maintenant décrire, à titre d'exemples non limitatifs, en se référant aux figures jointes en annexe, un assemblage combustible d'un réacteur nucléaire à eau sous pression suivant l'invention.

La figure 1 est une vue en élévation d'un assemblage combustible d'un réacteur nucléaire à eau sous pression.

La figure 2 est une vue en coupe suivant 2-2 de la figure 3, de l'embout inférieur de l'assemblage.

La figure 3 est une vue partielle en coupe par un plan horizontal, suivant 3-3 de la figure 2.

La figure 4 est une vue en coupe partielle d'une variante de réalisation de la plaque de retenue d'un embout inférieur suivant l'invention.

La figure 5 est une vue partielle en perspective d'un embout suivant l'invention dont la structure réticulée est réalisée par moulage.

La figure 6 est une vue en coupe analogue à la vue de la figure 2, d'un embout selon l'invention comportant une structure réticulée obtenue par moulage.

La figure 7 est une vue en perspective d'une variante de réalisation de la structure réticulée d'un embout suivant l'invention obtenue par moulage.

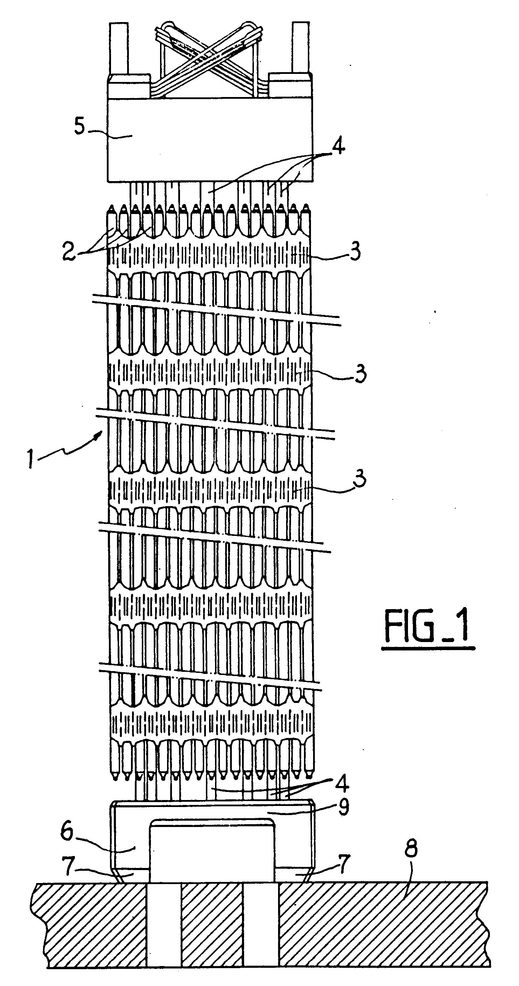

Sur la figure 1, on voit un assemblage combustible désigné de manière générale par le repère 1 et constitué par un faisceau de crayons combustibles parallèles 2 maintenus dans une ossature constituée par des tubes-guides 4 de direction longitudinale, des entretoises transversales 3 et des embouts d'extrémité 5 et 6. Les entretoises 3 sont constituées par des grilles dont les cellules reçoivent chacune un crayon combustible. Certaines positions du réseau des grilles sont occupées par des tubes-guides 4 dont la longueur est supérieure à la longueur des crayons combustibles 2. Chacun des tubes-guides 4 est fixé à l'ensemble des grilles-entretoises qui sont régulièrement espacées suivant la longueur de l'assemblage.

De plus, les tubes-guides sont reliés, à l'une de leurs extrémités, à un embout 5 constituant l'embout supérieur de l'assemblage et, à leur autre extrémité, à un second embout 6 constituant l'embout inférieur.

Dans sa position de service, l'assemblage est placé verticalement comme représenté sur la figure 1, l'embout inférieur 6 reposant, par l'intermédiaire de pieds 7, sur la surface supérieure de la plaque inférieure de coeur 8 du réacteur nucléaire.

La plaque 8 est percée de quatre trous de passage d'eau débouchant, en-dessous de l'embout inférieur 6 correspondant, au niveau de chacun des assemblages combustibles constituant le coeur du réacteur.

Les pieds supports 7 sont solidaires, à leur partie supérieure, d'un élément de support transversal 9 sur lequel sont fixées les extrémités inférieures des tubes-guides 4.

L'eau de refroidissement du réacteur traversant la plaque inférieure de coeur 8 par les ouvertures débouchant sous l'embout 6 traverse l'élément transversal 9 qui est percé d'un réseau d'ouvertures sur toute son épaisseur.

De cette manière, l'eau de refroidissement est amenée à circuler dans la direction verticale et de bas en haut en contact avec les crayons combustibles 2 dont elle assure le refroidissement.

Dans les dispositions suivant l'art antérieur, l'élément transversal 9 est constitué par une plaque adaptatrice percée sur toute son épaisseur par un réseau d'ouvertures assurant le passage de l'eau de refroidissement ou par une structure réticulée sur laquelle est rapportée et fixée de manière amovible une plaque comportant des ouvertures destinées à diriger et à régler l'écoulement de l'eau de refroidissement pénétrant dans l'assemblage.

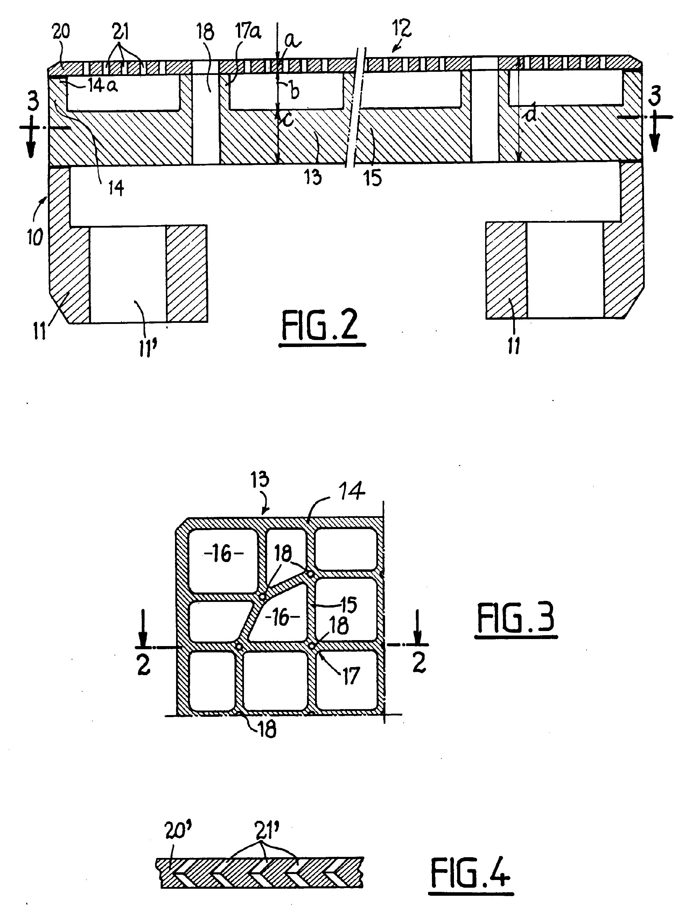

Sur la figure 2, on a représenté un embout inférieur d'un assemblage combustible suivant l'invention désigné de manière générale par le repère 10.

L'embout 10 comporte des pieds supports 11 analogues aux pieds supports 7 de l'assemblage représenté sur la figure 1 et destinés à venir reposer sur la plaque inférieure de coeur du réacteur nucléaire dans lequel est chargé l'assemblage combustible comportant l'embout inférieur 10.

Les pieds supports 11 sont solidaires à leur partie supérieure d'un élément transversal 12 analogue à l'élément 9 représenté sur la figure 1 et susceptible de remplir les fonctions de reprise d'effort et de maintien des crayons combustibles de l'assemblage habituellement assurées par une plaque adaptatrice.

L'élément 12 est constitué sous la forme d'un ensemble du type "sandwich" associant des composants superposés et assemblés rigidement les uns aux autres et constituant une structure en caisson comportant une partie interne creuse.

Un premier composant de l'élément 12 disposé à sa partie inférieure est constitué par une structure réticulée 13 dont une partie de la section par un plan horizontal est représentée sur la figure 3.

La structure réticulée 13 comporte un cadre extérieur 14 de forme parallélépipédique, dont la section carrée correspond sensiblement à la section transversale de l'assemblage combustible.

Dans le cas d'un assemblage combustible pour un réacteur nucléaire à eau sous pression, selon la conception actuelle, le cadre 14 présente une section carrée dont le côté est sensiblement égal à 20 cm. L'épaisseur de paroi du cadre 14 est de l'ordre de 10 mm ou un peu supérieure.

Les pieds supports 11 sont fixés par soudage sur la face inférieure de la structure 13, au niveau de chacun des angles de cette structure. Deux des pieds supports 11 comportent des ouvertures 11′ qui viennent s'engager sur des pions de positionnement solidaires de la surface supérieure de la plaque inférieure de coeur du réacteur, au moment de la mise en place de l'assemblage.

La structure réticulée 13 comporte des parois intérieures 15 solidaires du cadre 14 et délimitant des cellules 16 en forme de quadrilatères à angles arrondis. La plupart de ces quadrilatères sont constitués par des carrés placés suivant des rangées parallèles aux côtés du cadre 14.

Sur la figure 3, on a représenté une partie de la structure réticulée correspondant sensiblement au quart de la section plane transversale de cette structure.

Les parois 15 des cellules dont l'épaisseur est sensiblement égale à 10 mm se recoupent pour constituer des noeuds de jonction 17 au niveau desquels le métal de la structure 13 présente une certaine surépaisseur par rapport aux parois 15. Au niveau de chacun des noeuds 17, la structure réticulée 13 est percée sur toute son épaisseur d'un trou 18 permettant la fixation de l'extrémité inférieure d'un tube-guide de l'assemblage.

De manière à garder la disposition habituelle des tubes-guides d'un assemblage combustible pour réacteur nucléaire à eau sous pression, on a été amené à utiliser localement des formes de cellules 16 sensiblement différentes de la forme carrée.

La section transversale des cellules 16 en forme de quadrilatères telles que représentées sur la figure 3 est importante ; la section des cellules de plus faible dimension correspond au moins à la section transversale occupée dans l'assemblage par dix crayons combustibles ou plus. La structure réticulée 13 entraîne donc une perte de charge faible sur la circulation de l'eau de refroidissement et modifie peu cette circulation.

Comme il est visible sur la figure 2, le bord extérieur 14a du cadre 14 est surélevé par rapport à la face supérieure de la partie intérieure de la structure réticulée 13. De plus, au niveau de chacun des noeuds 17, autour de l'ouverture 18 correspondante d'engagement d'un tube-guide, la structure réticulée 13 est également surélevée par une partie 17a en saillie par rapport à la face supérieure de la structure réticulée.

Le bord surélevé 14a et les différentes parties en saillie 17a de la structure réticulée 13, au niveau des noeuds 17, présentent des extrémités supérieures situées dans un même plan à une hauteur b au-dessus de la face supérieure de la structure réticulée 13, cette hauteur b pouvant avoir comme ordre de grandeur la hauteur des parois des cellules de la structure réticulée.

L'embout inférieur 10 suivant l'invention comporte une plaque de retenue 20 superposée à la structure réticulée 13 et fixée par soudage sur la surface supérieure du rebord 14a du cadre 14 et sur les parties en saillie 17a. De cette manière, la plaque 20 dont la forme carrée et les dimensions sont analogues à celles de la section transversale de la structure réticulée 13 est exactement superposée à cette structure réticulée 13 avec laquelle elle constitue un caisson dont la partie interne creuse présente une hauteur b et se trouve délimitée par la face supérieure de la structure réticulée 13 d'une part et la plaque de retenue 20 d'autre part.

L'épaisseur a de la plaque de retenue 20 est sensiblement inférieure à l'épaisseur c de la structure réticulée, l'épaisseur a pouvant être par exemple de cinq à dix fois inférieure à l'épaisseur c.

La plaque de retenue 20 est percée d'ouvertures 21 dont le diamètre est sensiblement inférieur au diamètre d'un crayon combustible. Ce diamètre qui peut être par exemple de l'ordre de 5 mm est inférieur à la dimension maximale des espaces existant entre les éléments de maintien et les crayons combustibles au niveau des grilles-entretoises. Les ouvertures 21 sont placées suivant un réseau dense et régulier, ce qui ne présente pas d'inconvénient sur le plan de la fabrication et de l'utilisation de l'embout, dans la mesure où l'épaisseur a de la plaque de retenue 20 est très inférieure à l'épaisseur d'une plaque adaptatrice d'un embout suivant l'art antérieur.

La dimension et la disposition des ouvertures 21 traversant la plaque de retenue 20 sont déterminées de manière à assurer le maintien des crayons combustibles dans l'assemblage dans tous les cas et à éviter une réduction notable du débit de fluide de refroidissement traversant l'assemblage, en cas de chute d'un crayon combustible. De plus, les débris éventuellement transportés par l'eau de refroidissement du réacteur et présentant une dimension telle qu'ils risquent de se coincer dans les interstices entre les crayons combustibles et les éléments de maintien au niveau de la première grille-entretoise sont arrêtés par la plaque de retenue 20.

Les épaisseurs a et c de la plaque de retenue et de la structure réticulée respectivement, l'espacement b entre ces éléments et l'épaisseur totale d de l'élément transversal 12 sont déterminés de manière à obtenir une très bonne tenue mécanique de l'élément 12 sous les charges qui lui sont appliquées, tout en limitant la perte de charge du fluide de refroidissement traversant l'élément 12, à un niveau faible. La partie interne creuse de la structure en caisson de l'élément 12 constitue un espace de tranquillisation de l'eau de refroidissement pénétrant dans l'assemblage par son embout inférieur et de piégeage des débris transportés par cette eau.

L'élément 12 subit principalement un effort de flexion qui est supporté en grande partie par la structure réticulée 13 dont la hauteur et la rigidité peuvent être importantes. La structure réticulée 13 comportant des cellules 16 de grandes dimensions n'introduit qu'une perte de charge faible sur la circulation du fluide de refroidissement.

En outre, la plaque de retenue 20 présente une épaisseur faible et un réseau serré et régulier d'ouvertures de petites dimensions, si bien que la perte de charge occasionnée par la plaque de retenue 20 est également faible et la répartition de la pression de l'eau de refroidissement homogène, suivant la section transversale de l'assemblage.

Cette plaque de retenue est donc toute différente d'une plaque de répartition et de réglage de la chute de pression à travers un embout d'assemblage connue de l'art antérieur et permet d'arrêter les débris éventuellement transportés par l'eau de refroidissement du réacteur. De plus, elle délimite l'espace interne de l'embout dans lequel le régime hydraulique de l'eau de refroidissement est régulé.

La structure réticulée 13 peut être obtenue par coulée et usinage d'une pièce monobloc ou par assemblage par soudage de plaquettes d'épaisseur voulue.

Le rebord 14a et les saillies 17a peuvent être venus de matière avec la structure 13 et obtenus par usinage de cette structure ou rapportés sur sa partie supérieure.

La plaque de retenue 20 est constituée par une simple plaque ou feuillard percée d'un réseau régulier d'ouvertures.

Les différentes parties constituantes de l'embout peuvent être assemblées par toute technique de soudage et en particulier par soudage par faisceau d'électrons.

Sur la figure 4, on a représenté une variante de réalisation de la plaque de retenue d'un embout inférieur suivant l'invention. La plaque de retenue 20′ comporte des ouvertures 21′ constituées chacune par deux alésages concourants faisant un certain angle entre eux et placés dans des directions obliques par rapport aux faces de la plaque 20′. Les trous 21′ ont ainsi une forme de V dans la section transversale de la plaque 20′.

De cette manière, la plaque 20′ assure une retenue efficace des crayons combustibles même dans le cas où le diamètre des alésages est égal ou supérieur au diamètre des crayons combustibles.

Dans certains cas, ces ouvertures de forme angulaire permettent de limiter la perte de charge et de rendre plus homogène la répartition de la pression du fluide de refroidissement traversant l'embout inférieur.

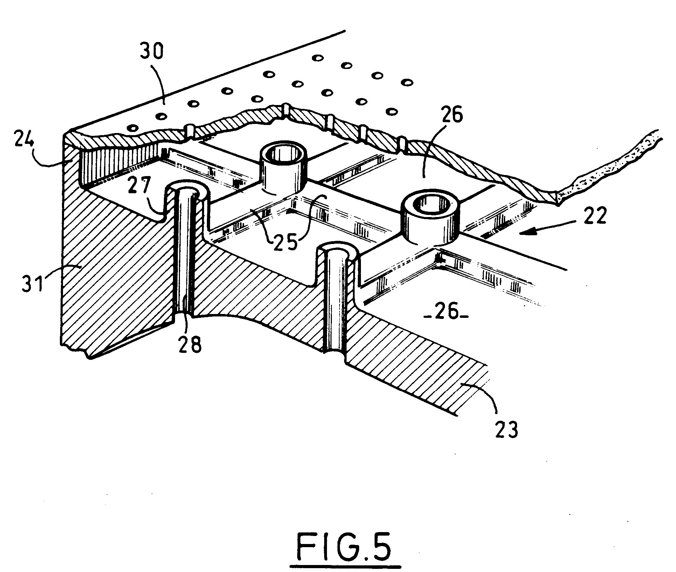

Sur la figure 5, on voit une partie de l'élément transversal de reprise d'effort 22 d'un embout inférieur suivant l'invention constitué par une structure réticulée 23 et par une plaque de retenue de débris 30 rapportée sur la structure 23.

La structure réticulée 23 qui présente une forme générale identique à celle de la structure réticulée 13 représentée sur les figures 2 et 3, est réalisée de manière monobloc par moulage d'un acier allié ou d'un alliage de nickel. On utilise de préférence un procédé de moulage de précision, de manière à limiter le plus possible les opérations d'usinage à effectuer sur la pièce moulée.

L'acier ou l'alliage dont on effectue le moulage aura de préférence l'une des compositions suivantes :
- Acier A286 (ASTM A638) : C < 0,08, Ni 24 à 27, Cr 13,5 à 16, Mo 1,00 à 1,50, Ti 1,90 à 2,35, Al < 0,35, U 0,10 à 0,5, Mn < 2,00, Si < 1,00, le reste étant constitué par du fer.
- Acier NFA32-0,56 (Z2CN18-10M) : C < 0,03, Si < 1,20, Mo < 1,50, Cr 17 à 20, Ni 8 à 12.
- Inconel 718.

La structure réticulée 23 comporte un cadre 24 de forme carrée et des parois 25 délimitant, à l'intérieur du cadre 24, des cellules 26 de grande dimension par rapport à la section des crayons de l'assemblage.

Les parois 25 se recoupent pour constituer des noeuds de jonction 27 en saillie par rapport à la surface supérieure des parois 25.

Au niveau de chacun des noeuds 27, la structure réticulée 23 est percée d'un trou 28 permettant la fixation de l'extrémité inférieure d'un tube-guide de l'assemblage.

La plaque de retenue 30 est fixée sur la partie supérieure du cadre 24 et sur les noeuds 27 de la structure 23.

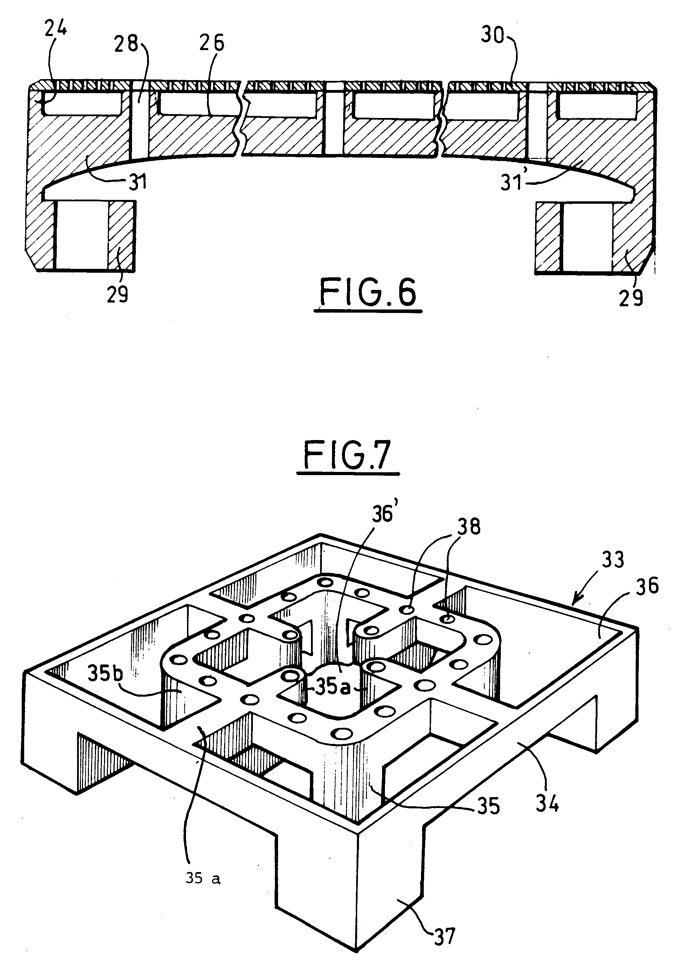

La structure d'ensemble de l'élément transversal d'un assemblage telle que représentée sur la figure 5 est globalement identique à la structure 13 représentée sur les figures 2 et 3. Cependant, comme il est visible sur la figure 5 ainsi que sur la figure 6, la structure moulée 23 comporte des renforts 31, 31′ le long de ses côtés, joignant les parois 25 et le cadre 24 et permettant d'obtenir une résistance mécanique accrue de l'embout. Ces renforts peuvent être de taille plus ou moins importante, suivant les conditions d'utilisation de l'embout.

Comme il est visible sur la figure 6, les pieds 29 de l'assemblage peuvent être réalisés par moulage, en une seule pièce avec la structure 23.

Les pieds 29 peuvent également être rapportés sur la structure 23 et fixés par soudage.

Dans tous les cas, on réduit considérablement les opérations d'usinage de l'embout en réalisant la structure réticulée par moulage plutôt que par mécano-soudage.

Sur la figure 7, on a représenté une structure réticulée 33 d'un embout d'un assemblage combustible réalisée par moulage et correspondant à une variante de réalisation de la structure moulée 23 représentée sur les figures 5 et 6.

La structure 33 comporte un cadre 34, des parois 35 et des pieds-supports 37 réalisés en une seule pièce par moulage.

Les parois 35 délimitent, à l'intérieur du cadre 34, des cellules fermées 36 et une ouverture centrale 36′ constituée par des cellules ouvertes séparées par des parois 35a sensiblement perpendiculaires aux côtés du cadre 34.

Les cellules fermées 36 sont séparées de l'ouverture centrale 36′ par une paroi 35b ayant la forme d'un contour carré à angles arrondis.

Des ouvertures 38 traversant la structure 33 sont ménagées dans les parois 35 pour recevoir chacune la partie inférieure d'un tube-guide de l'assemblage. La structure 33 qui est sensiblement équivalente à la structure 23 sur le plan de la tenue mécanique conférée à l'embout peut être réalisée par moulage de manière plus simple.

L'embout inférieur suivant l'invention qui ne comporte pas de plaque adaptatrice permet donc de réaliser un très bon compromis entre les exigences relatives à la tenue mécanique et aux pertes de charge de l'élément transversal de l'embout inférieur.

Il est bien évident que l'invention ne se limite pas au mode de réalisation qui a été décrit.

C'est ainsi que la structure réticulée peut comporter des cellules ayant des formes et des dimensions différentes de celles qui ont été indiquées et que les épaisseurs relatives de la structure réticulée et de la plaque de retenue peuvent être assez largement différentes de celles qui ont été indiquées.

L'assemblage combustible pourrait reposer directement sur la plaque de support du coeur sans l'intermédiaire de pieds supports, ce qui simplifie la construction de l'embout inférieur.

Il est à remarquer que, dans la mesure où l'élément transversal subit principalement des forces de flexion, la partie centrale ou âme de cet élément ne subit que des contraintes faibles ou nulles et peut être largement évidée, sans augmenter de façon importante les contraintes dans les autres parties de l'élément transversal. L'espacement b correspondant à la hauteur de la partie creuse de la structure en caisson peut donc être important.

L'invention s'applique aux embouts inférieurs des assemblages combustibles de tout réacteur nucléaire refroidi par de l'eau légère.

## Revendications

1. Assemblage combustible d'un réacteur nucléaire refroidi par de l'eau légère constitué par une ossature comportant des tubes-guides longitudinaux (4), des grilles-entretoises transversales (3) et des embouts d'extrémité (5, 6) et un faisceau de crayons combustibles (2) parallèles maintenus dans l'ossature par des éléments de maintien au niveau des grilles-entretoises, l'embout inférieur destiné à venir reposer sur une plaque de support (8) du coeur du réacteur, comportant un élément transversal (9, 12) de reprise d'effort et de retenue des crayons combustibles (2), cet élément comportant une structure réticulée (13) résistant à la flexion, limitée extérieurement par un cadre (14) dont la section correspond sensiblement à la section transversale de l'assemblage et présentant des parois (15) délimitant des cellules (16) de grande dimension, sur laquelle est rapportée et fixée, de manière superposée, une plaque de retenue (20, 20′) de faible épaisseur par rapport à la structure réticulée (13) percée d'ouvertures (21), assemblage caractérisé en ce que l'élément transversal (12) est réalisé sous la forme d'un caisson et la structure réticulée (13) comporte des parties en saillie (14a, 17a) par rapport à sa face supérieure sur l'extrémité desquelles est fixée par soudage la plaque de retenue (20) qui est percée d'un réseau régulier d'ouvertures dont le diamètre est inférieur à la distance maximale entre les crayons (2) et les éléments de maintien de ces crayons, dans les grille-entretoises (3), les parties en saillie (14a, 17a) déterminant un espacement b entre la structure réticulée (13) et la plaque de retenue (20), dans une disposition parallèle aux faces de cette structure, et avec un certain espacement b du même ordre de grandeur que l'épaisseur de la structure réticulée (13), de manière à ménager à l'intérieur du caisson, entre la structure réticulée (13) et la plaque de retenue anti-débris (20), un espace libre de tranquillisation de l'écoulement de l'eau de refroidissement du réacteur et de récupération de débris.

2. Embout inférieur suivant la revendication 1, caractérisé par le fait que les parois (15) de la structure réticulée (13) sont reliées entre elles pour constituer des noeuds (17) au niveau desquels la structure réticulée (13) est percée d'ouvertures (18) pour la fixation des tubes-guides (4) de l'assemblage combustible.

3. Embout inférieur suivant l'une quelconque des revendications 1 et 2, caractérisé par le fait que les cellules (16) de la structure réticulée (13) présentent la forme de quadrilatères à angles arrondis.

4. Embout inférieur suivant l'une quelconque des revendications 1 à 3, caractérisé par le fait que la plaque de retenue (20′) est traversée par des ouvertures (21′) constituée chacune par deux alésages concourants disposés de manière angulaire l'un par rapport à l'autre et dirigés dans une direction oblique par rapport aux faces de la plaque (20′).

5. Embout inférieur suivant l'une quelconque des revendications 1 à 4, caractérisé par le fait que la structure réticulée (23, 33) est réalisée en une seule pièce par moulage.

6. Embout inférieur suivant la revendication 5, caractérisé par le fait que la structure réticulée (23, 33) est réalisée par moulage d'un acier allié renfermant moins de 0,08 % de C, de 24 à 27 % de Ni, de 13,5 à 16 % de Cr, de 1,00 à 1,50 % de Mo, de 1,90 à 2,5 % de Ti, moins de 0,35 % d'Al et de 0,10 à 0,50 % d'U.

7. Embout inférieur suivant la revendication 5, caractérisé par le fait que la structure réticulée (23, 33) est réalisée par moulage d'un acier renfermant moins de 0,03 % de C, moins de 1,20 % de Si, moins de 1,50 % de Mo, de 17 à 20 % de Cr et de 8 à 12 % de Ni.

8. Embout inférieur suivant la revendication 5, caractérisé par le fait que la structure réticulée (23, 33) est réalisée par moulage d'un alliage de nickel.

9. Embout inférieur suivant l'une quelconque des revendications 5 à 8, caractérisé par le fait que la structure réticulée (23) comporte un cadre (24), des parois (25) délimitant des cellules (26) à l'intérieur du cadre (24) et des renforts (31, 31′) suivant les côtés du cadre (24), à sa périphérie.

10. Embout inférieur suivant la revendication 5, caractérisé par le fait qu'il comporte un cadre (34), des parois (35) délimitant, à l'intérieur du cadre (34), des cellules fermées (36) à sa périphérie et une ouverture centrale (36′), l'ouverture (36′) étant constituée par des cellules ouvertes communicantes séparées par des parois (35a) sensiblement perpendiculaires aux côtés du cadre (34).

## Patentansprüche

1. Brennelementbündel eines Leichtwasserkernreaktors bestehend aus einem Gerippe von länglichen Führungsrohren (4), querliegenden Zwischengittern (3) und den jeweiligen Endstücken (5, 6) sowie einem Bündel von parallelen Brennstäben (2), die im Gerippe durch Halterungen an den Zwischengittern gehalten werden, wobei das Fußstück auf einer Trägerplatte (8) des Reaktorkerns aufliegt und einen Querträger (9, 12) für die einwirkenden Kräfte und den Halt der Brennstäbe (2) besitzt; dieser Querträger besitzt eine biegefeste Gitterstruktur (13) mit einem äußeren Rahmen (14), der im Querschnitt in etwa dem Bündelquerschnitt entspricht und Trennwände (15) hat, die große Zellen (16) bilden; darauf ist eine Rückhalteplatte (20, 20′) angebracht und befestigt, die eine geringere Stärke als die Gitterstruktur (13) besitzt und mit Durchbrüchen (21) versehen ist; Bündel **dadurch gekenn****zeichnet**, daß der Querträger (12) in Kastenform ausgeführt ist und die Gitterstruktur (13) an ihrer Oberseite vorstehende Teile (14a, 17a) besitzt, an deren Enden die Rückhalteplatte (20) angeschweißt wird, die mit einem regelmäßigen Raster von Durchbrüchen versehen ist, deren Durchmesser kleiner als der größte Abstand zwischen den Brennstäben (2) und den Halterungen dieser Brennstäbe an den Zwischengittern (3) ist, wobei die vorstehenden Teile (14a, 17a) parallel zu den Seiten der Struktur einen Abstand b zwischen der Gitterstruktur (13) und der Rückhalteplatte (20) und einen Abstand b der gleichen Größenordnung wie die Dicke der Gitterstruktur (13) festlegen, so daß im Kasteninnern zwischen der Gitterstruktur (13) und der Rückhalteplatte für Reststoffe (20) ein freier Raum zur Beruhigung des Reaktorkühlwasserdurchlaufs und zum Auffangen der Reststoffe entsteht.

2. Fußstück gemäß Anspruch 11,
**dadurch gekennzeichnet**, daß die Trennwände (15) der Gitterstruktur (13) miteinander verbunden sind und Knoten (17) bilden, an denen die Gitterstruktur (13) mit Durchbrüchen (18) zur Befestigung der Führungsrohre (4) des Brennelementbündels versehen ist.

3. Fußstück gemäß Anspruch 1 bzw. 2,
**dadurch gekennzeichnet**, daß die Zellen (16) der Gitterstruktur (13) die Form von unregelmäßigen Vierecken mit abgerundeten Winkeln haben.

4. Fußstück gemäß Anspruch 1 bis 3,
**dadurch gekennzeichnet**, daß die Rückhalteplatte (20′) von Öffnungen (21′) durchbrochen ist, die aus je zwei unter einem bestimmten Winkel zusammenlaufenden Bohrungen bestehen und schräg zu den Seiten der Platte (20′) verlaufen.

5. Fußstück gemäß Anspruch 1 bis 4,
**dadurch gekennzeichnet**, daß die Gitterstruktur (23, 33) aus einem Stück als Formguß hergestellt wird.

6. Fußstück gemäß Anspruch 5
**dadurch gekennzeichnet**, daß die Gitterstruktur (23, 33) aus einem legierten Stahl mit einer Zusammensetzung von weniger als 0,08 % C, 24 bis 27 % Ni, 13,5 bis 16 % Cr, 1,00 bis 1,50 % Mo, 1,90 bis 2,5 % Ti, 0,35 Al und 0,10 bis 0,50 % U als Formguß hergestellt wird.

7. Fußstück gemäß Anspruch 5,
**dadurch gekennzeichnet**, daß die Gitterstruktur (23, 33) als Formguß aus einem Stahl mit einem Gehalt von weniger als 0,03 % C, 1,20 % Si, 1,50 % Mo, 17 bis 20 % Cr und 8 bis 12 % Ni hergestellt wird.

8. Fußstück gemäß Anspruch 5,
**dadurch gekennzeichnet,** daß die Gitterstruktur (23, 33) aus einer Nickellegierung als Formguß hergestellt wird.

9. Fußstück gemäß Anspruch 5 bis 8,
**dadurch gekennzeichnet**, daß die Gitterstruktur (23) einen Rahmen (24) und Trennwände (25) besitzt, die innerhalb des Rahmens (24) Zellen (26) bilden sowie Verstärkungen (31, 31′) entlang des äußeren Randes des Rahmens (24) hat.

10. Fußstück gemäß Anspruch 5,
**dadurch gekennzeichnet**, daß es einen Rahmen (34) und Trennwände (35) besitzt, die innerhalb des Rahmens (34) an seiner Peripherie geschlossene Zellen (36) und in der Mitte eine Öffnung (36′) bilden, wobei diese Öffnung (36′) von offenen miteinander kommunizierenden Zellen gebildet wird, die durch zu den Seiten des Rahmens (34) senkrecht verlaufende Trennwände (35a) getrennt sind.

## Claims

1. Fuel assembly of a nuclear reactor cooled by light water, consisting of a framework comprising longitudinal guide tubes (4), transverse spacer grids (3) and end connectors (5, 6) and a bundle of parallel fuel rods (2) held in the framework by holding elements in the region of the spacer grids, the lower connector intended to come to rest on a support plate (8) of the core of the reactor, comprising a transverse element (9, 12) for the absorption of fore and for retaining the fuel rods (2), this element comprising a reticular structure (13) which is resistant to bending and limited externally by a frame (14), the cross-section of which corresponds substantially to the cross-section of the assembly, and having walls (15) delimiting cells (16) or large dimension, on which is fixed in a superposed manner a retaining plate (20, 20′) having a small thickness relative to the reticular structure (13) pierced by holes (21), this assembly being characterised in that the transverse element (12) is produced in the form of a box and the reticular structure (13) comprises parts (14a, 17a) which project with respect to its upper face on the end of which parts there is fastened by welding the retaining plate (20) which is pierced with a regular network of orifices, the dimension of which is smaller than the maximum dimension between the rods (2) and the elements holding these rods in the spacer grids (3), the projecting parts (14a, 17a) determining the spacing b between the reticular structure (13) and the retaining plate (20), in an arrangement parallel to the faces of this structure and with a certain spacing b of the same order of magnitude as the thickness of the reticular structure (13), in such a way as to provide within the box, between the reticular structure (13) and the anti-debris retaining plate (20), a free space for steadying the flow of the cooling water of the reactor and for recovering the debris.

2. Lower connector as claimed in Claim 1, characterised in that the walls (15) of the reticular structure (13) are connected to one another to form nodes (17) at which the reticular structure (13) is pierced with orifices (18) for fastening the guide tubes (4) of the fuel assembly.

3. Lower connector as claimed in any one of Claims 1 and 2, characterised in that the cells (16) of the reticular structure (13) have the form of quadrilaterals with rounded angles.

4. Lower connector as claimed in any one of Claims 1 to 3, characterised in that the retaining plate (20′) has passing through it orifices (21′) each consisting of two converging bores arranged angularly with respect to one another and pointed in an oblique direction with respect to the faces of the plate (20′).

5. Lower connector as claimed in any one of Claims 1 to 4, characterised in that the reticular structure (23, 33) is produced in one piece by moulding.

6. Lower connector as claimed in Claim 5, characterised in that the reticular structure (23, 33) is produced by moulding of an alloyed steel containing less than 0.08% of C, 24 to 27% of Ni, 13.5 to 16% of Cr, 1.00 to 1.50% of Mo, 1.90 to 2.5% of Ti, less than 0.35% of Al and 0.10 to 0.50% of U.

7. Lower connector as claimed in Claim 6, characterised in that the reticular structure (23, 33) is produced by moulding of a steel containing less than 0.03% of C. less than 1.20% of Si, less than 1.50% of Mo, 17 to 20% of Cr and 8 to 12% of Ni.

8. Lower connector as claimed in Claim 5, characterised in that the reticular structure (23, 33) is produced by moulding of a nickel alloy.

9. Lower connector as claimed in any one of Claims 5 to 8, characterised in that the reticular structure (23) comprises a frame (24), walls (25) delimiting cells (26) within the frame (24), and reinforcements (31, 31′) along the sides of the frame (24) on its periphery.

10. Lower connector as claimed in Claim 5, characterised in that it comprises a frame (34), walls (35) delimiting within the frame (34) closed cells (6) on its periphery and a central orifice (36′), the orifice (36′) consisting of open communicating cells separated by walls (35a) substantially perpendicular to the sides of the frame (34).
